# EUROPÄISCHE PATENTANMELDUNG

(11) **EP 3 193 431 A1**
(43) Veröffentlichungstag der Anmeldung: **19.07.2017**
(21) Anmeldenummer: 16151282.7
(22) Anmeldetag: 14.01.2016
(51) Int. Cl.: H02K 1/24, H02K 15/02, H02K 1/02

(54) **ELEKTROBLECH MIT GEDRUCKTEM STEG**

(71) Anmelder: Siemens Aktiengesellschaft, 80333 München (DE)
(72) Erfinder: Büttner, Klaus, 97618 Hollstadt (DE); Kirchner, Klaus, 97645 Ostheim (DE); Warmuth, Matthias, 97618 Windshausen (DE)

(57) **Zusammenfassung**

Bei hoher Stabilität soll die magnetische Effizienz insbesondere von Rotorblechen erhöht werden. Dazu wird ein Elektroblech (9) für eine elektrische Maschine bereitgestellt, dessen Grundkörper ein Einzelblech (5) aus einem magnetisierbaren Material ist, wobei das Einzelblech (5) mehrere Aussparungen (1) aufweist. Mindestens ein Steg (10) ist in einer der Aussparungen (1) vorgesehen, wobei der Steg (10) durch ein 3D-Druckverfahren aus einem nicht magnetisierbaren Material gedruckt ist.

## Beschreibung

Die vorliegende Erfindung betrifft ein Elektroblech für eine elektrische Maschine, dessen Grundkörper ein Einzelblech aus einem magnetisierbaren Material ist, wobei das Einzelblech mehrere Aussparungen aufweist. Darüber hinaus betrifft die vorliegende Erfindung ein Verfahren zum Herstellen eines Elektroblechs für eine elektrische Maschine durch Ausstanzen eines Einzelblechs aus einem magnetisierbaren Rohblech, wobei das Einzelblech mehrere Aussparungen aufweist. Der Begriff "Elektroblech" wird hier nicht als Materialname, sondern als Bezeichnung für ein einzelnes, fertig geformtes Blech verwendet, das typischerweise zur Bildung eines Blechpakets für eine elektrische Maschine mit gleichartigen Blechen gestapelt wird.

Unter einer elektrischen Maschine wird hier ein Motor, ein Generator oder aber auch ein Transformator verstanden. Insbesondere werden auch für die Rotoren von Motoren und Generatoren Elektrobleche der genannten Art verwendet.

Für eine möglichst hohe Drehmomentenausbeute werden die Rotorbleche so dimensioniert, dass eine Reaktanz in Richtung einer q-Achse möglichst klein ist. Deshalb sind üblicherweise in Richtung der q-Achse viele, großflächige Ausstanzungen im Rotorblech vorgesehen. Dies führt aber zu einer Schwächung der mechanischen Stabilität, sodass die Drehzahleignung begrenzt ist. Durch Verwendung von Stegen wird das Rotorblech gegen Fliehkraft stabilisiert. Diese Stege führen jedoch zu Streuflüssen, wodurch die Effizienz der elektrischen Maschine reduziert wird.

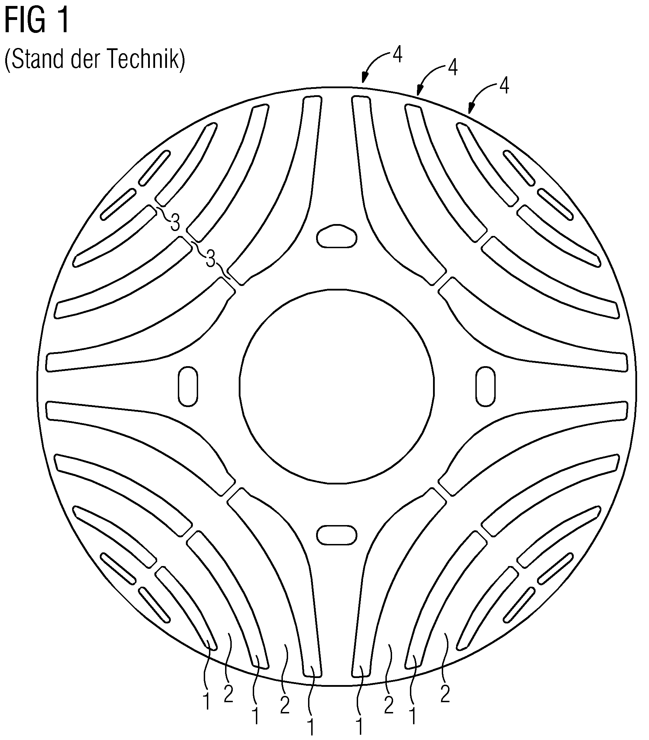

Ein Rotorblech, wie es beispielsweise in FIG 1 dargestellt ist, wird typischerweise in Stanztechnik hergestellt. Aus einem Rohblech wird dabei ein Einzelblech ausgestanzt. Derartige Einzelbleche für einen Rotor sind rund und werden zu einem Blechpaket zusammengefügt, das dann die gewünschten magnetischen Eigenschaften des Rotors besitzt.

Jedes Einzelblech besitzt gemäß dem Beispiel von FIG 1 Ausstanzungen 1 zur Führung des Magnetfelds. Zwischen den Ausstanzungen 1 ergeben sich Flussleitflächen 2. Zur Erhöhung der Stabilität des Einzelblechs und damit auch des gesamten Rotors sind in den Aussparungen vielfach Stege 3 vorgesehen, die die Aussparungen überbrücken und von einer Flussleitfläche 2 zu einer benachbarten Flussleitfläche 2 führen. Da die Aussparungen 1 aus magnetischen Gründen bis zum Rand des Einzelblechs verlaufen sollten, dies aber aus Stabilitätsgründen nicht sinnvoll ist, werden die einzelnen Aussparungen 1 am Außenumfang des Einzelblechs durch Außenstege 4 überbrückt, sodass das Einzelblech am Umfang geschlossen ist. Die vielen Stege 3 und 4 führen jedoch zu den erwähnten Streuflüssen und der daraus resultierenden Effizienzreduktion.

Die Aufgabe der vorliegenden Erfindung besteht somit darin, ein Elektroblech für eine elektrische Maschine anzugeben, das bei hoher Stabilität eine erhöhte magnetische Effizient besitzt. Außerdem soll ein entsprechendes Herstellungsverfahren angegeben werden.

Erfindungsgemäß wird diese Aufgabe gelöst durch ein Elektroblech für eine elektrische Maschine, dessen Grundkörper ein Einzelblech aus einem magnetisierbaren Material ist, wobei das Einzelblech mehrere Aussparungen aufweist. Das Elektroblech weist außerdem mindestens einen Steg in einer der Aussparungen auf, wobei der Steg durch ein 3D-Druckverfahren aus einem nicht magnetisierbaren Material gedruckt ist.

In vorteilhafter Weise wird also das magnetisierbare Einzelblech durch einen oder mehrere stabilisierende Stege ergänzt, die durch ein 3D-Druckverfahren in die Aussparungen gedruckt werden. Die Stege verbinden dann benachbarte Flussleitflächen mechanisch, sodass eine erhöhte Stabilität erreicht wird. Eine magnetische Überbrückung erfolgt jedoch nicht, da die Stege aus einem nicht magnetisierbaren Material gedruckt sind. Dadurch kann eine hohe magnetische Effizienz gewährleistet werden.

Ein besonderer Vorteil liegt auch darin, dass der Großteil des Bleches durch ein günstiges Großserienverfahren hergestellt werden können und nur noch spezielle Bereiche durch ein teures additives Verfahren hinzugefügt werden müssen. Dadurch lassen sich zusätzliche Materialeigenschaften einbringen wie z.B. nicht ferromagnetisch, hohe Festigkeit etc.

Insbesondere kann es sich bei dem gedruckten Material um ein nicht magnetisierbares Metall handeln.

Das Einzelblech kann eine Isolierschicht aufweisen, und der gedruckte Steg kann frei von einer solchen Isolierschicht sein. Dies bedeutet, dass das Einzelblech aus einem typischerweise isolierten Rohblech ausgestanzt sein kann, während die gedruckten Stege nach dem Drucken keine zusätzliche Isolierung erhalten. Dadurch kann die Herstellung der Stege vereinfacht werden, aber es sollte gewährleistet werden, dass die einzelnen Stege sich nicht berühren.

In einer speziellen Ausführungsform sind am Außenumfang des Elektroblechs mehrere magnetisierbare Abschnitte des Einzelblechs und mehrere der nicht magnetisierbaren gedruckten Stege abwechselnd angeordnet. Dadurch kann beispielsweise ein geschlossener Außenumfang beziehungsweise Außenrand des Elektroblechs erreicht werden, und trotzdem ergeben sich dort aufgrund der nicht magnetisierbaren Stege keine magnetischen Streuflüsse.

In einer Ausgestaltung des Elektroblechs ist jeder der gedruckten Stege dünner als die Blechstärke des Einzelblechs. Hierdurch kann gewährleistet werden, dass sich auch bei einem Blechpaket die gegebenenfalls nicht isolierten Stege nicht berühren.

q-Achsen schneiden in der Regel ideal geformte Aussparungen eines Elektroblechs. Bei einer Ausgestaltung der Erfindung sind mehrere der nicht magnetisierbaren gedruckten Stege parallel zu einer ersten q-Achse in einem vorgegebenen Abstand zu der ersten q-Achse angeordnet. Dieser Abstand ist vorzugsweise sehr gering, sodass der jeweilige Steg immer noch nahezu in der Mitte der Längserstreckung der jeweiligen Aussparung angeordnet werden kann. Durch einen solchen Abstand können die Voraussetzungen geschaffen werden, dass die Stege übereinanderliegender Elektrobleche ihrerseits nicht direkt übereinander zu liegen kommen.

In einer weiteren Ausgestaltung weist das Elektroblech eine zu der ersten q-Achse benachbarte zweite q-Achse auf, und mehrere der nicht magnetisierbaren gedruckten Stege sind parallel zu der zweiten q-Achse in einem vorgegebenen Abstand zu der zweiten q-Achse angeordnet, wobei die gedruckten Stege parallel zu der ersten q-Achse in einer Umfangsrichtung vor der ersten q-Achse und die gedruckten Stege parallel zu der zweiten q-Achse in der Umfangsrichtung nach der zweiten q-Achse angeordnet sind. Werden also zwei Elektrobleche dieser Art so gegeneinander verdreht übereinander gelegt, dass die erste q-Achse des ersten Elektroblechs mit der zweiten q-Achse des zweiten Elektroblechs in Überdeckung steht, so können sich die gedruckten Stege beider Bleche aufgrund des durch die Abstände gewährleisteten Versatzes nicht berühren. Eine elektrische Isolation der Stege ist daher nicht notwendig.

Gemäß einer weiteren Ausführungsform können mehrere der gedruckten Stege ausschließlich auf einem ersten Teilkreis mit einem ersten Radius und mehrere der gedruckten Stege ausschließlich auf einem zweiten Teilkreis mit einem gegenüber dem ersten Radius anderen, zweiten Radius angeordnet sein. Dies betrifft insbesondere Außenstege, die am Außenumfang des Elektroblechs angeordnet sind. Durch diesen radialen Versatz kann wiederum erreicht werden, dass bei einer Verdrehung übereinanderliegender Elektrobleche gegeneinander die gedruckten Stege nicht unmittelbar übereinanderliegen und sich daher nicht berühren können.

In einer speziellen Ausgestaltung ist das Elektroblech in Sektoren unterteilt. Die Sektoren können dann so variiert werden, dass Stege von übereinanderliegenden Elektroblechen sich nicht berühren. Z.B. ergeben sich bei einem vierpoligen Motor vier Sektoren, wobei jeder Sektor eine q-Achse besitzt, im Beispiel also vier.

Bei einer speziellen Ausgestaltung verläuft der erste Teilkreis über einen ersten der Sektoren und einen dem ersten gegenüberliegenden, zweiten Sektor, nicht aber über einen dem ersten benachbarten, dritten Sektor und nicht über einen dem dritten Sektor gegenüberliegenden, vierten Sektor, und der zweite Teilkreis verläuft über den dritten Sektor und den vierten Sektor, nicht aber über den ersten und zweiten Sektor. Durch diese unterschiedliche Gestaltung der Sektoren kann die Voraussetzung geschaffen werden, dass übereinanderliegende Elektrobleche mit ihren Außenstegen nicht direkt übereinanderliegen, indem die Elektrobleche zueinander verdreht werden.

Vorzugsweise werden die soeben beschriebenen Elektrobleche in einem Elektroblech um einen solchen Winkel verdreht übereinander angeordnet, der dem Winkel zwischen der ersten und der zweiten q-Achse entspricht. Die Verdrehung entspricht 360°/Polzahl, wobei die Polzahl 2-, 4-, 6-, 8- oder höherpolig sein.

Wie oben bereits angedeutet wurde, kann eine elektrische Maschine mit einem solchen Blechpaket ausgestattet sein, welches wiederum die oben genannten Elektrobleche aufweist. Insbesondere kann ein Rotor eines Motors oder Generators mit einem solchen Blechpaket versehen sein. Damit erhält der Rotor eine hohe Stabilität bei gleichzeitig hoher Effizienz.

Die oben genannte Aufgabe wird außerdem gelöst durch ein Verfahren zum Herstellen eines Elektroblechs für eine elektrische Maschine durch
- Ausstanzen eines Einzelblechs aus einem magnetisierbaren Rohblech, wobei
- das Einzelblech mehrere Aussparungen aufweist, und
- Auftragen mindestens eines Stegs in eine der Aussparungen durch ein 3D-Druckverfahren, wobei
- der Steg bei dem Auftragen aus einem nicht magnetisierbaren Material gebildet wird.

In vorteilhafter Weise werden also gestanzte Einzelbleche durch angedruckte Elemente ergänzt. Dadurch kann das kostengünstige Stanzverfahren beibehalten werden, und gleichzeitig kann der Freiheitsgrad bezüglich der Wahl der Materialien eines Elektroblechs erhöht werden. Speziell können also Flussleitabschnitte mit einem gut magnetisierbaren Material und stabilisierende Stege mit einem nicht magnetisierbaren Material realisiert werden.

Die oben im Zusammenhang mit dem Elektroblech erwähnten funktionellen Merkmale können auch als Verfahrensmerkmale des erfindungsgemäßen Verfahrens angesehen werden.

Die vorliegende Erfindung wird nun anhand der beigefügten Zeichnungen näher erläutert, in denen zeigen:
- FIG 1: eine Draufsicht auf ein Rotorblech gemäß dem Stand der Technik;
- FIG 2: ein Einzelblech nach dem Stanzen und vor dem Drucken;
- FIG 3: ein Elektroblech auf der Basis des Einzelblechs von FIG 2 nach dem Drucken;
- FIG 4: zwei Elektrobleche der Art von FIG 3 verdreht übereinander angeordnet; und
- FIG 5: einen Ausschnitt des Elektroblechpaars von FIG 4.

Die nachfolgend näher geschilderten Ausführungsbeispiele stellen bevorzugte Ausführungsformen der vorliegenden Erfindung dar. Dabei ist zu beachten, dass die einzelnen Merkmale nicht nur in den geschilderten Kombinationen, sondern auch in Alleinstellung oder in anderen technisch sinnvollen Kombinationen realisiert werden können.

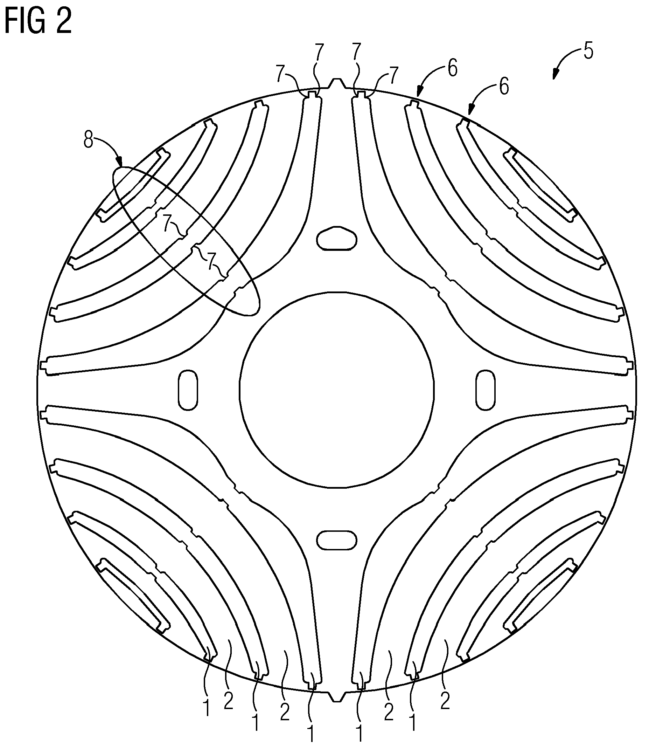

In den FIG 2 bis 5 sind Elektrobleche dargestellt, mit denen eine elektrische Maschine und insbesondere ein Motor oder Generator hergestellt werden können. Speziell handelt es sich bei den dargestellten Elektroblechen um Bleche für Rotoren, d.h. Rotorbleche. Aber auch andere Bleche von elektrischen Maschinen können mit der vorgestellten Technik realisiert werden. Insbesondere erfolgt bei der Herstellung eine Kombination von Stanz- und 3D-Drucktechnik, sodass z.B. das Rotorblech für erhöhte Drehzahl bei gleichzeitig hoher Effizienz hergestellt werden kann.

Das in FIG 2 dargestellte Blech wird hier als Einzelblech 5 bezeichnet, wie es aus einem Rohblech ausgestanzt wird. Dieses Einzelblech 5 besitzt Aussparungen 1 und Flussleitflächen 2 wie im Stand der Technik gemäß FIG 1. Aus Gründen der Stabilität für den Stanzprozess mit anschließendem Handling ist die Kontur des Einzelblechs 5 vor dem 3D-Druckvorgang außen geschlossen. Dazu sind am Ende jeder Ausstanzung 1 Prozessstege 6 vorgesehen, die verhindern, dass jede Aussparung 1 radial nach außen mündet. Diese Prozessstege 6 werden am Ende des Herstellungsverfahrens abgedreht.

Weiterhin ist in FIG 2 zu erkennen, dass an jedem Prozesssteg 6 hier sogenannte Brückenköpfe 7 vorgesehen sind. Diese haben den Zweck, dass die später zu druckende Strecke möglichst kurz sind beziehungsweise der Druck sich nicht über die gesamte Breite einer Aussparung 1 erstrecken muss. Auch an denjenigen Stellen 8, etwa in der Mitte der Längserstreckungen der meisten Aussparungen 1 sind solche Brückenköpfe 7 vorgesehen. Die Brückenköpfe 7 sind Teil der Flussleitflächen und befinden sich an den Enden der später einzudruckenden Stege.

Dabei erfüllen sie zusätzlich die Aufgabe, den Temperatureinfluss beim 3D-Drucken (in der Regel Laser-Bestrahlung) auf die umgebenden Flussleitflächen zu reduzieren.

Das in FIG 2 dargestellte Einzelblech 5 wird also vorzugsweise durch ein Stanzverfahren hergestellt. Prinzipiell könnte es aber auch durch ein anderes Verfahren, z.B. ein Laserschneidverfahren, hergestellt werden. Als Rohblech kann übliches Dynamo- oder Transformatorenblech verwendet werden, das auf dem Markt verfügbar ist und das typischerweise bereits mit einer Isolierschicht versehen ist.

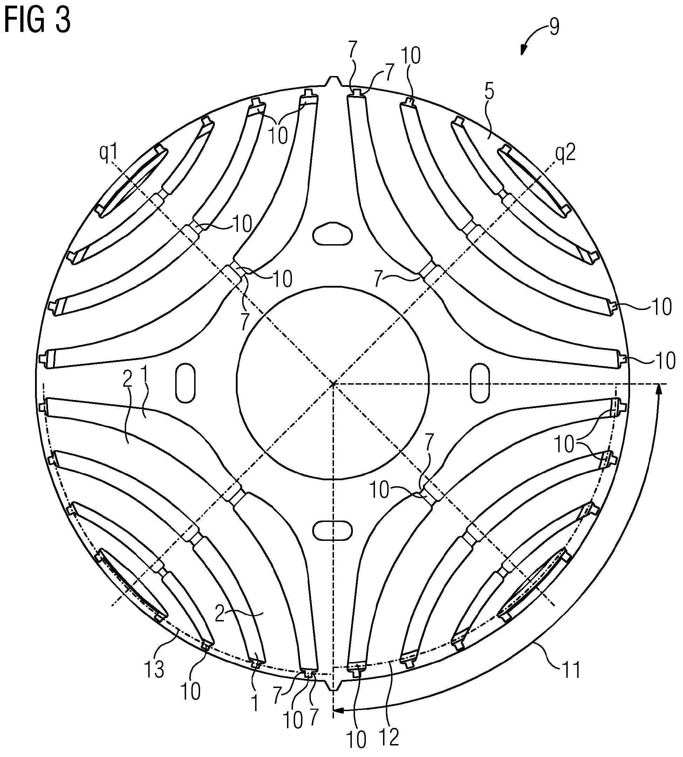

In FIG 3 ist nun ein fertiges Elektroblech beziehungsweise Rotorblech 9 dargestellt. Es entstand in einem 3D-Druckverfahren, bei dem das Einzelblech 5 von FIG 2 mit Stegen 10 versehen wurde. In dem Beispiel von FIG 3 sind an zahlreichen verschiedenen Stellen solche Stege 10 an das Einzelblech 5 angedruckt worden. Sie erhöhen die Festigkeit beziehungsweise Stabilität des Einzelblechs 5 deutlich. Insbesondere sind an den meisten Stellen, an denen auch Brückenköpfe 7 vorhanden sind, solche Stege 10 angedruckt.

Speziell verlaufen parallel zu einer ersten q-Achse q1 radiale Stege 10 zwischen entsprechenden Brückenköpfen 7. Sie teilen die jeweils länglich ausgebildeten Ausstanzungen beziehungsweise Aussparungen 1. Die Stege 10 müssen aber nicht parallel zur q-Achse q1 verlaufen. Sie müssen auch nicht in einer geraden Linie hintereinander durch alle Aussparungen verlaufen. Vielmehr können sie auch anders über die Aussparungen 1 verteilt werden. Ebenso können im Mittelbereich der Aussparungen auch mehr als ein Steg 10 vorgesehen sein.

In dem Beispiel von FIG 3 ist das Elektroblech 9 entsprechend der Polzahl in vier Sektoren beziehungsweise Quadranten einteilbar. Die Mittellinien dieser Sektoren können die q-Achsen q1, q2 etc. bilden, die hier senkrecht aufeinander stehen. Bei höherpoligen Maschinen kann das Elektroblech 9 auch mehr als vier q-Achsen besitzen. Im einfachsten Fall besitzt das Elektroblech 9 nur eine q-Achse.

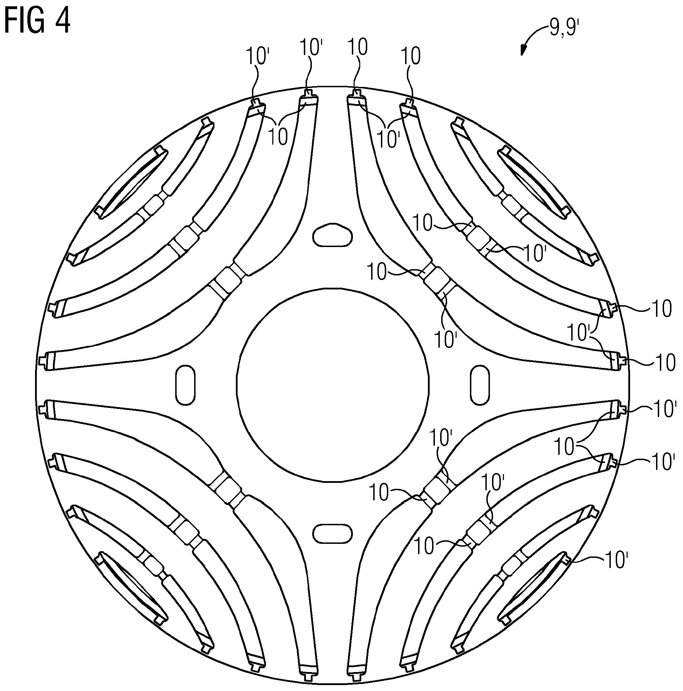

Zurückkommend auf das Beispiel von FIG 3 sind hier parallel zu der zweiten q-Achse q2 Stege 10 ebenfalls in einem gewissen Abstand zu dieser angeordnet. In der Umfangsrichtung im Uhrzeigersinn befinden sich die Stege 10 parallel zu der ersten q-Achse q1 hinter dieser und die Stege 10 parallel zur zweiten q-Achse q2 vor dieser. Entgegen dem Uhrzeigersinn ist dies umgekehrt. Diese Anordnung der Stege hat bei der Stapelung von mehreren Elektroblechen Bedeutung, was im Zusammenhang mit FIG 4 erläutert werden wird.

Das Elektroblech 9 lässt sich, wie erwähnt, in Sektoren 11 unterteilen, wobei die q-Achsen jeweils Mittelhalbierende sind. In dem Beispiel von FIG 3 stellen die Sektoren Quadranten dar. In dem in FIG 3 eingezeichneten Quadranten 11 verläuft ein erster Teilkreis 12 nahe am Außenrand. Der erste Teilkreis 12 beginnt und endet an den Grenzen des Quadranten 11. Diese Grenzen sind jedoch nicht zwingend. Der erste Teilkreis 12 befindet sich auf einem ersten Radius um das Zentrum des Elektroblechs 9. Auf dem ersten Teilkreis 12 sind Stege 10 in dem 3D-Druckverfahren in die jeweilige Aussparung 1 gedruckt. Die Stege 10 sind allenfalls bündig mit den Oberflächen des Blechs 5 oder dünner als das Blech 5.

In dem dem Quadranten 11 gegenüberliegenden Quadranten befinden sich ebenfalls Stege 10 auf einem Teilkreis mit dem gleichen Radius wie derjenige des Teilkreises 12.

In einem Quadranten unmittelbar neben dem Quadranten 11 ist ein zweiter Teilkreis 13 ebenfalls am Außenrand des Einzelblechs 5 vorgesehen. Dieser zweite Teilkreis 13 besitzt einen etwas größeren Radius als der des Teilkreises 12. Auch er beginnt und endet in diesem Beispiel an den Grenzen des Quadranten. In dem 3D-Druckverfahren sind wiederum Stege 10 in den Aussparungen 1 zwischen den Brückenköpfen 7 eingedruckt.

In gleicher Weise sind Stege 10 in dem gegenüberliegenden Quadranten eingedruckt.

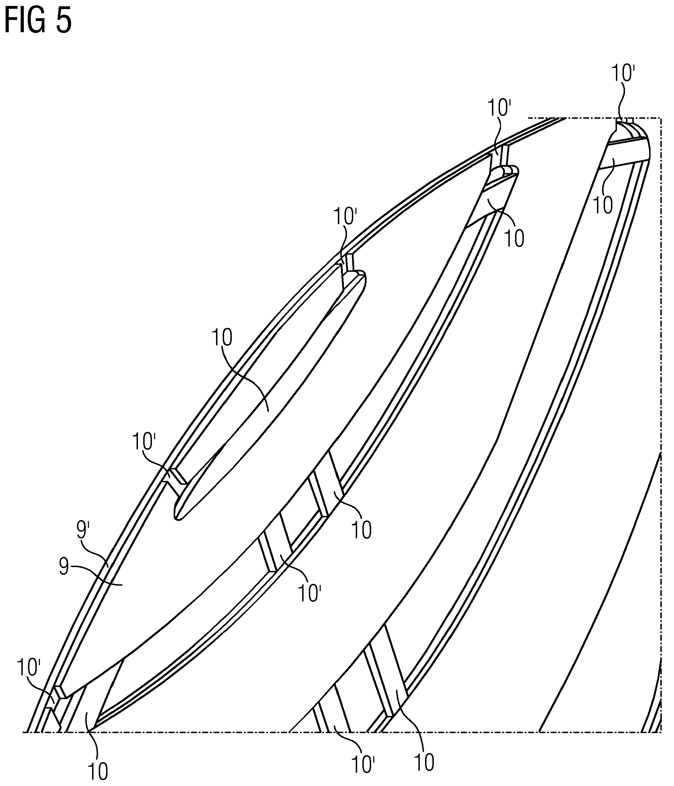

Aus den FIG 4 und 5 wird nun der Sinn dieser speziellen Positionierungen der Stege 10 erkennbar. Dieses Prinzip der Positionierung lässt sich aber auch auf andere Geometrien der Elektrobleche 9 übertragen, nämlich auch auf solche mit mindestens einer und mehr q-Achsen. Dabei sind die Radien der Teilkreise beziehungsweise die Abstände zu den q-Achsen in geeigneter Weise so zu wählen, dass bei zwei unmittelbar übereinanderliegenden Elektroblechen 9 die aufgedruckten Stege 10 nicht unmittelbar übereinanderliegen, wenn die beiden Elektrobleche 9 gegeneinander vorzugsweise um eine Sektorgröße verdreht sind.

In FIG 4 sind in einer Draufsicht zwei Elektrobleche 9 und 9' dargestellt. Die beiden Elektrobleche 9 und 9' sind exakt gleich aufgebaut. Sie sind nur gegeneinander um 90 Grad gedreht, d.h. um eine Sektor- beziehungsweise Quadrantengröße. Während das obere Elektroblech 9 Stege 10 besitzt, besitzt das untere Elektroblech 9' die Stege 10'. Im oberen rechten Quadranten (bezogen auf FIG 4) liegen also die Stege 10 des oberen Elektroblechs 9 ganz außen, während die Stege 10' des unteren Elektroblechs 9' etwas weiter innen liegen. Die Stege 10 und 10' berühren sich nicht. In dem Quadranten unten rechts in FIG 4 ist die Anordnung der Stege 10 und 10' umgekehrt. Dieser spezifische Wechsel setzt sich am Umfang pro Quadrant fort. Ebenso liegen die Stege 10 des oberen Elektroblechs 9 im Uhrzeigersinn vor der q-Achse q2 (vergleiche FIG 3) und diejenigen Stege 10' des unteren Elektroblechs 9' nach der q-Achse q2. An der ersten q-Achse q1 ist dies umgekehrt. Auch in diesem Fall berühren sich die Stege 10 und 10' nicht, da sie den entsprechenden Abstand von den jeweiligen q-Achsen besitzen.

Darüber hinaus ist FIG 4 zu entnehmen, dass die Prozessstege 6 (vergleiche FIG 2) abgedreht wurden. Dadurch wurde der Rotor-Außendurchmesser für den erforderlichen Luftspalt hergestellt. Durch das Entfernen der Prozessstege 6 sind keine Stege mehr vorhanden, die die Effizienz mindern würden. Der Streufluss ist unterbunden, da sämtliche Stege 10 und 10' nicht magnetisierbar.

In FIG 5 ist ein Ausschnitt des Elektroblechpaars von FIG 4 in perspektivischer Darstellung wiedergegeben. Es sind hier deutlich die beiden Elektrobleche 9 und 9' übereinanderliegend zu erkennen. Die Stege 10 liegen also im Wesentlichen in der Mittelebene des oberen Elektroblechs 9 und die Stege 10' in der Mittelebene des unteren Elektroblechs 9'. Da korrespondierende Stege 10 und 10' entweder in Umfangsrichtung oder in radialer Richtung zueinander versetzt sind, berühren sie sich nicht. Eine spezielle elektrische Isolierung der gedruckten Stege ist also nicht notwendig. Das gleiche Ziel ließe sich erreichen, wenn die Stege 10 beziehungsweise 10' dünner als die Einzelbleche 5 der Elektrobleche 9 beziehungsweise 9` wären.

In vorteilhafter Weise ergibt sich also eine Erhöhung der Drehzahltauglichkeit eines erfindungsgemäß hergestellten Rotors durch Erhöhung der Festigkeit bei gleichzeitig höchstmöglicher Effizienz. Außerdem kann eine Verbesserung des Schwingverhaltens erreicht werden, indem beispielsweise durch den 3D-Druck die Stege an Positionen gedruckt werden, die Eigenresonanzen an unbedeutenden Frequenzpositionen hervorrufen.

Durch die Stanztechnik steht darüber hinaus eine Vielzahl an isolierten Elektroblechen zur Verfügung. Diese Elektrobleche sind in ihren Eigenschaften für die Anwendung in der Elektromotorentechnik optimiert. Diese Optimierungen betreffen insbesondere die Eigenschaften: Ummagnetisierungsverluste, magnetische Polarisation, Permeabilität, Sättigungspolarisation, Koerzitivfeldstärke und so weiter. Zudem sind die Elektrobleche bereits isoliert und stehen mit Beschichtungsarten C3, C4, C5 und so weiter zur Verfügung. Daneben ist die Stanztechnik in der Regel sehr kostengünstig, und die Herstellungszeit eines gestanzten Einzelblechs liegt typischerweise im Bereich einer Sekunde.

Durch den 3D-Druck wird nur an den vorbereiteten Bereichen ein unmagnetischer Steg angedruckt. Durch Versatz der Stege kann bei verdrehter Stapelung der Einzelbleche (z.B. bei vier Polen Verdrehung um 90 Grad) ein durchgehender axialer Kontakt der angedruckten Stege vermieden werden, wie dies oben dargestellt wurde. Die gedruckten Stege liegen nämlich versetzt zueinander. Somit ist, wie ebenfalls oben erwähnt wurde, in vorteilhafter Weise keine zusätzliche Isolation erforderlich. Dieser Vorteil lässt sich, wie ebenfalls bereits angedeutet wurde, auch durch Stege erreichen, die etwas dünner als die Blechdicke ausgeführt werden.

Entsprechend der Drehzahlanforderung kann die Ausführung der Stege in der Anzahl beziehungsweise Querschnittsfläche flexibel angepasst werden.

## Patentansprüche

1. Elektroblech (9,9') für eine elektrische Maschine,
- dessen Grundkörper ein Einzelblech (5) aus einem magnetisierbaren Material ist, wobei
- das Einzelblech (5) mehrere Aussparungen (1) aufweist, **gekennzeichnet durch**
- mindestens einen Steg (10,10') in einer der Aussparungen (1), wobei
- der Steg (10,10') **durch** ein 3D-Druckverfahren aus einem nicht magnetisierbaren Material gedruckt ist.

2. Elektroblech nach Anspruch 1, wobei das Einzelblech (5) eine Isolierschicht aufweist, während der gedruckte Steg (10, 10') keine Isolierschicht aufweist.

3. Elektroblech nach einem der vorhergehenden Ansprüche, wobei am Außenumfang des Elektroblechs (9,9') mehrere magnetisierbare Abschnitte des Einzelblechs (5) und mehrere der nicht magnetisierbaren gedruckten Stege (10,10') abwechselnd angeordnet sind.

4. Elektroblech nach einem der vorhergehenden Ansprüche, wobei jeder der gedruckten Stege (10,10') dünner als die Blechstärke des Einzelblechs (5) ist.

5. Elektroblech nach einem der vorhergehenden Ansprüche, bei dem mehrere der nicht magnetisierbaren gedruckten Stege (10, 10') parallel zu einer ersten q-Achse (q1), in einem vorgegebenen Abstand zu der ersten q-Achse (q1) angeordnet sind.

6. Elektroblech nach Anspruch 5, das eine zu der ersten q-Achse (q1) benachbarte zweite q-Achse (q2) aufweist, und bei dem mehrere der nicht magnetisierbaren gedruckten Stege (10, 10') parallel zu der zweiten q-Achse (q2), in einem vorgegebenen Abstand zu der zweiten q-Achse (q2) angeordnet sind, wobei die gedruckten Stege (10,10') parallel zu der ersten q-Achse (q1) in einer Umfangsrichtung vor der ersten q-Achse (q1) und die gedruckten Stege (10,10') parallel zu der zweiten q-Achse (q2) in der Umfangsrichtung nach der zweiten q-Achse (q2) angeordnet sind.

7. Elektroblech nach einem der vorhergehenden Ansprüche, bei dem mehrere der gedruckten Stege (10,10') ausschließlich auf einem ersten Teilkreis (12) mit einem ersten Radius und mehrere der gedruckten Stege (10,10') ausschließlich auf einem zweiten Teilkreis (13) mit einem gegenüber dem ersten Radius anderen zweiten Radius angeordnet sind.

8. Elektroblech nach Anspruch 6, das in Sektoren, insbesondere vier Quadranten (11), unterteilt ist mit den beiden q-Achsen (q1,q2) als Mittelhalbierende.

9. Elektroblech nach Anspruch 7 und 8, bei dem der erste Teilkreis (12) über einen ersten der Sektoren und einem dem ersten gegenüberliegenden zweiten Sektor verläuft, nicht aber über einen dem ersten benachbarten dritten Sektor und nicht über einen dem dritten Sektor gegenüberliegenden vierten Sektor, und der zweite Teilkreis (13) über den dritten Sektor und den vierten Sektor verläuft, nicht aber über den ersten und zweiten Sektor.

10. Blechpaket mit zwei Elektroblechen nach Anspruch 7, bei dem die Elektrobleche (9,9') um einen Winkel verdreht übereinander gestapelt sind, wobei der Winkel demjenigen zwischen der ersten und der zweiten q-Achse (q1,q2) entspricht.

11. Elektrische Maschine mit einem Blechpaket nach Anspruch 10.

12. Verfahren zum Herstellen eines Elektroblechs (9,9') für eine elektrische Maschine durch
- Ausstanzen eines Einzelblechs (5) aus einem magnetisierbaren Rohblech, wobei
- das Einzelblech (5) mehrere Aussparungen (1) aufweist, **gekennzeichnet durch**
- Auftragen mindestens eines Stegs (10,10') in eine der Aussparungen (1) **durch** ein 3D-Druckverfahren, wobei
- der Steg (10,10') bei dem Auftragen aus einem nicht magnetisierbaren Material gebildet wird.
